# EUROPEAN PATENT APPLICATION

(11) **EP 1 865 214 A1**
(43) Date of publication of application: **12.12.2007**
(21) Application number: 06730728.0
(22) Date of filing: 24.03.2006
(51) Int. Cl.: F16C 29/04, F16C 25/06, F16C 27/06, G02B 7/04

(54) **LINEAR MOTION ROLLING GUIDE DEVICE AND LENS DEVICE**

(30) Priority: 28.03.2005 JP 2005092153
(71) Applicant: Sony Corporation, Minato-ku Tokyo (JP)
(72) Inventor: MATSUMOTO, Kenichi, Shinagawa-ku, Tokyo, 1410001 (JP)
(74) Representative: Merryweather, Colin Henry
(86) International application number: PCT/JP2006/306780
(87) International publication number: WO 2006/104223

(57) **Abstract**

The present invention relates to a linear motion rolling guide device which enables a movable element to linearly move through rolling elements, and to a lens device including the linear motion rolling guide device.

A linear motion rolling guide device according to the present invention includes: a guide element 2 including a first guide groove 7 extending linearly and fitting holes 11; a movable element 3 including a second guide groove 8 extending linearly and facing said first guide groove 7 with a predetermined interval; a fixed element 4 for retaining the guide element 2; a roller unit 5 including a plurality of cylindrical rollers 14, which rolls freely and is placed between the first guide groove 7 and the second guide groove 8; and a pair of spring plates 6A, 6B for giving preload to the roller unit 5 through the guide element 2 and the movable element 3. Fitting pins 22 capable of fitting into the fitting holes 11 of the guide element 2 are provided to the fixed element 4 and the fitting holes 11 are long holes extended in a direction perpendicular to a direction in which the first guide groove 7 extends.

According to the present invention, a suitable preload can be given to the roller unit and a lens barrel can be moved linearly smoothly stably.

## Description

### TECHNICAL FIELD

The present invention relates to a linear motion rolling guide device which enables a movable element to linearly move through rolling elements, and to a lens device; particularly to the linear motion rolling guide device that is constantly able to give suitable preload without adjustment of the preload given to the rolling elements even in a case in which the movable element is at any position, and to the lens device including the linear motion rolling guide device.

### BACKGROUND ART

As a conventional linear motion rolling guide device, for example, there is one described in a Patent document 1. There is described a lens barrel used for a still camera or a video camera in Patent document 1. The lens barrel described in Patent document 1 is characterized by including [a moving lens barrel retaining a lens, moving in an optical axis direction and having a plurality of first guide grooves being parallel to the optical axis; a fixed lens barrel having a plurality of second guide grooves being parallel to the optical axis that face the aforesaid first guide grooves respectively; and a plurality of ball bearings clamped between each aforesaid first guide groove and each aforesaid second guide groove facing each other].

According to the lens barrel of Patent document 1 having such configuration, such an effect that [a moving lens barrel can be moved forward/backward smoothly because ball bearings are used for the guide groove being parallel to the optical axis] or the like, is expected.

Further, as another example of a motion rolling guide device of the past, for example, there is one described in Patent document 2. There is described a rolling guide unit which guides an object to be moved in a motion mechanical portion such as a machine tool or industrial robot; particularly, one related to a finite motion rolling guide unit that prevents displacement of a retainer retaining a rolling element is described in Patent document 2. The finite motion rolling guide unit described in Patent document 2 is characterized by including [a pair of track elements tracks of which are formed in a longitudinal direction respectively and are arranged facing each other; rolling elements that are arranged between the tracks and roll while receiving a load; and a retainer for retaining each of the aforesaid rolling elements to freely roll] and is characterized in that [at least any one of the track portion of the aforesaid track element and one or more of the aforesaid rolling elements is made of magnet and is magnetized to attract the other].

According to the finite motion rolling guide unit in Patent document 2 having such configuration, [as for a sliding friction force between the track portion and the rolling element, an equivalent attractive force of magnet is added to an external load. Consequently, because a slip on the contact between the rolling element and the track portion may be less caused, an effect in which displacement of the retainer is controlled] or the like is expected.
Patent Document 1:
   Japanese Unexamined Patent Application Publication No. H8-29656.
Patent Document 2:
   Japanese Unexamined Patent Application Publication No. H9-72334.

Typically, in a linear motion rolling guide device including a fixed element, movable element and rolling element, in order to obtain stable linear motion, it is necessary to manage preload given to the rolling element and to add preload of suitable intensity to the rolling element without cease. As a managing means for the preload, for example, it is known that a protruding means such as a set screw or the like is provided and preload for the rolling element is adjusted by pressing the fixed element or movable element to the rolling element using the set screw.

The aforesaid finite motion rolling guide unit in Patent document 2 shows an example including preload adjustment mechanism using the set screw. However, in a case in which a set screw is used as a preload adjustment mechanism, preload is changed depending on tightening condition of the set screw and if the set screw is loose, the preload decreases. On the other hand, if a mechanism that does not cause looseness to the set screw is used, there may be such problems that the mechanism itself becomes complicated; the number of parts increases, thus a cost becomes high; and assembly steps increase, thus workability may become deteriorated.

Further, a preload adjustment mechanism that uses a spring plate is disclosed in a lens barrel of Patent document 1, and is configured such that a cross section of a yoke is "U"-shaped and a coil bobbin that retains a lens toward the aperture side moves linearly. Consequently, a retaining force with which the yoke retains the coil bobbin decreases in inverse proportion to protrusive quantity of the coil bobbin, thereby changing the preload depending on the position of the movable element, and thus, there is a problem that uniform preload may not be obtained.

Problems that the present invention is to improve are an aspect that in a case in which a protruding means such as a set screw or the like is used as a preload adjustment mechanism in a conventional linear motion rolling guide device, preload is changed depending on a tightening condition of the set screw and if the set screw is loose, the preload decreases; and also an aspect that in a case of a preload adjustment mechanism using a conventional spring plate, because a retaining force with which a yoke retains a coil bobbin decreases in inverse proportion to protrusive quantity of the coil bobbin, the preload is changed depending on the position of the movable element and it may not be possible to obtain uniform preload.

### DISCLOSURE OF THE INVENTION

A linear motion rolling guide device according to the present invention is characterized by including: a guide element including a first guide groove extending linearly and fitting holes symmetrically arranged with the first guide groove in between; a movable element including a second guide groove extending linearly and facing the first guide groove with a predetermined interval; a fixed element for retaining the guide element; a roller unit including a plurality of rolling elements, which rolls freely and is placed between the first guide groove and the second guide groove; and a preloading element for giving preload to the roller unit through the guide element and the movable _element, in which fitting pins capable of fitting into the fitting holes of the guide element are provided to the fixed element; and the fitting holes are long holes extended in a direction perpendicular to a direction in which the first guide groove extends.

Further, a linear motion rolling guide device according to the present invention is characterized by including: a fixed element including a plurality of first guide grooves extending linearly and parallel to each other; a movable element including a plurality of second guide grooves extending linearly and parallel to each other, facing the first guide grooves with a predetermined interval and; a plurality of roller units including a plurality of rolling elements, which roll freely and are placed between the first guide grooves and the second guide grooves, in which at least one guide element including one of the plurality of first guide grooves, and fitting holes retained by the fixed element and arranged symmetrically with the first guide groove in between; and a preloading element for giving preload to the roller units through the guide element and the movable element, fitting pins capable of fitting into the fitting holes of the guide element are provided to the fixed element; and the fitting holes are long holes extended in a direction perpendicular to a direction to which the first guide groove extends.

Further, a lens device according to the present invention is characterized by including: a fixed lens barrel including a plurality of first guide grooves extending linearly and parallel to each other; a movable lens barrel including a plurality of second guide grooves extending linearly and parallel to each other, facing the first guide grooves with a predetermined interval; and a plurality of roller units including a plurality of rolling elements, which roll freely and are placed between the first guide grooves and the second guide grooves, in which at least one guide element including one of the plurality of first guide grooves and fitting holes retained by the fixed element and arranged symmetrically with the first guide groove in between, and a preloading element for giving preload to the roller unit through the guide element and the movable element, are provided; fitting pins capable of fitting into the fitting holes of the guide element are provided to the fixed element; and the fitting holes are long holes extended in a direction perpendicular to a direction in which the first guide groove extends.

In the linear motion rolling guide device according to the present invention, a roller unit including a plurality of rolling elements are placed between the first guide groove provided in a guide element or a fixed element and the second guide groove provided in a movable element, and a predetermined preload is given to the roller unit through the guide element and the movable element from a preloading element. Consequently, linear motion of the movable element can be implemented smoothly in relative to the guide element or to the fixed element, and an attitude change of the movable element can be controlled even when the rolling element rolls and changes its position, and stable motion can be obtained. Further, because fitting holes provided in the guide element are long holes extended in a direction perpendicular to a direction in which the guide groove extends, an attitude change in a direction to which the guide element inclines can be controlled while absorbing deviation of a component.

According to the linear motion rolling guide device and the lens device of the present invention, adjustment work of preloading to the roller unit may not be required, and a suitable preload is given to the roller unit without cease and smooth and stable linear movement can be realized even when the rolling element rolls and changes its position.

### BRIEF DESCRIPTION OF DRAWINGS

FIG. 1 is an exploded perspective view showing a first embodiment of a linear motion rolling guide device of the present invention;
FIG. 2 is an assembled perspective view of the linear motion rolling guide device shown in FIG. 1;
FIG. 3 is a front view of the linear motion rolling guide device shown in FIG. 2;
FIG. 4 is a sectional view of X-X line portion shown in FIG. 3;
FIGS. 5A, 5B and 5C are explanatory views for explaining motions of a linear motion rolling guide device of the present invention, in which FIG. 5A shows a state of the device in a center position, FIG. 5B shows a state of the device on the left side position and FIG. 5C shows a state of the device on the right side position;
FIGS. 6A and 6B are perspective views showing motions of a linear motion rolling guide device of the present invention, in which FIG. 6A shows a state of the device moved to the left side and FIG. 6A shows a state where of the device moved to the right side;
FIG. 7 is an exploded perspective view showing a second embodiment of a linear motion rolling guide device of the present invention;
FIG. 8 is an exploded perspective view showing a third embodiment of a linear motion rolling guide device of the present invention;
FIG. 9 is an exploded perspective view showing a fourth embodiment of a linear motion rolling guide device of the present invention;
FIG. 10 is an exploded perspective view showing a fifth embodiment of a linear motion rolling guide device of the present invention;
FIG. 11 is an assembled perspective view of the linear motion rolling guide device shown in FIG. 10;
FIG. 12 is a front view of the linear motion rolling guide device shown in FIG. 11;
FIG. 13 is a sectional view of Y-Y line portion shown in FIG. 12;
FIG. 14 is an exploded perspective view showing a first embodiment of a lens device using a linear motion rolling guide device of the present invention;
FIGS. 15A to 15D are explanatory views of another embodiment of a lens barrel supporting structure of a lens device according to the present invention, in which FIG. 15A shows a state of inner and outer movable lens barrels supported on a fixed lens barrel by roller units arranged at six places, and FIGS. 15B, 15C and 15D show states of a movable lens barrel supported on a fixed lens barrel by roller units arranged at three places;
FIGS. 16A to 16D are explanatory views of further another embodiment of a lens barrel supporting structure of a lens device according to the present invention, in which FIGS. 16A, 16B, 16C and 16D show states of a movable lens barrel supported on a fixed lens barrel by roller units arranged at four places;
FIG. 17 is a perspective view showing an embodiment of an imaging device having a linear motion rolling guide device and a lens device of the present invention in a retracted state;
FIG. 18 is an perspective view showing a state where a movable lens barrel of the lens device protrudes from the state shown in FIG. 17; and
FIGS. 19A to 19C are explanatory views showing states of a lens device according to the present invention, in which FIG. 19A shows a retracted state, FIG. 19B shows a state where a first movable lens barrel alone protrudes and FIG. 19C is a state where a second movable lens barrel protrudes in addition to the first movable lens barrel.

### BEST MODE FOR CARRYING OUT THE INVENTION

A linear motion rolling guide device and a lens device in which a guide element can be moved smoothly and stably by giving a predetermined preload to a roller unit and it is possible to control a large tilt of the guide element, are obtained with a simplified configuration.

Embodiments of the present invention are hereinafter explained with reference to attached drawings.

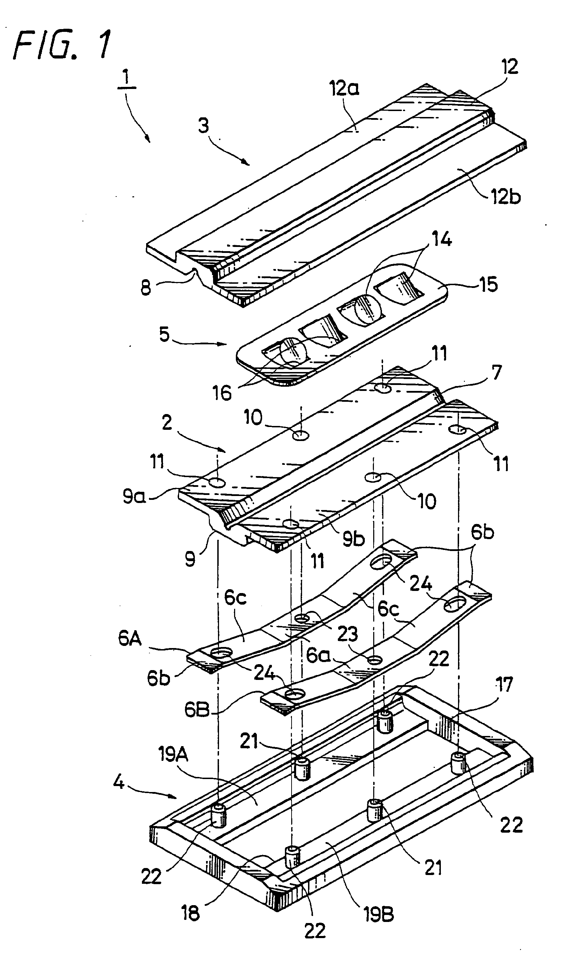

As shown in FIGS. 1 to 4, a linear motion rolling guide device 1 showing a first embodiment of a linear motion rolling guide device of the present invention includes: a guide element 2 including a first guide groove 7; a movable element 3 including a second guide groove 8; a fixed element 4 retaining the guide element 2; a roller unit 5 that rolls freely and is placed between the first guide groove 7 and the second guide groove 8; and a pair of spring plates 6A, 6B of two pieces showing an example of a preloading element.

The guide element 2 is formed of a plate-shaped element where a plane shape is rectangular and a section in a direction perpendicular to the longitudinal direction thereof is "T"-shaped. The first guide groove 7 reaching from one end to the other end continuously in the longitudinal direction is provided at approximately center portion of the plane side of the guide element 2. A section in a direction perpendicular to the longitudinal direction of the first guide groove 7 is "V"-shaped, and a clearance groove for avoiding contact to the rolling element is provided at the bottom portion. Slopes of both sides of the first guide groove 7 are set to approximately 45°, respectively. A convex portion 9 reaching from one end to the other end continuously in the longitudinal direction is provided at approximately a center portion on the surface opposite to the surface where the first guide groove 7 of the guide element 2 is provided, and concave portions on both sides of the convex portion 9 are eaves portions 9a, 9b.

A positioning hole 10 and two fitting holes 11, 11 are provided respectively to a pair of eaves portions 9a, 9b. In the pair of eaves portions 9a, 9b where each portion is a spring receiving portion, the positioning hole 10 is set up at approximately a center portion in the longitudinal direction and two fitting holes 11, 11 are set up at approximately an equal interval at both sides in the longitudinal direction with the positioning hole 10 at the center. The two fitting holes 11, are long holes-in a direction perpendicular to the direction to which the first guide groove 7 extends.

The movable element 3 has a shape approximately similar to the guide element 2 and is formed of a plate-shaped element whose shape is "T"-shaped. The second guide groove 8 reaching from one end to the other end continuously in the longitudinal direction is provided at approximately a center portion on the bottom side of the guide element 2. A section in a direction perpendicular to the longitudinal direction of the second guide groove 8 is "inverse V"-shaped, and a clearance groove for avoiding contact to the rolling element is provided at the vertex portion. Slopes of both side of the second guide groove 8 are set to approximately 45°, respectively. A convex portion 12 reaching from one end to the other end continuously in the longitudinal direction is provided at approximately a center portion on the surface opposite to the surface where the second guide groove 8 of the movable element 3 is provided and eaves portions 12a, 12b are set up at both sides of the convex portion 12.

Size in the width direction of the movable element 3 is approximately the same as that of the guide element 2, but as for the size in the longitudinal direction, the movable element 3 is longer than the guide element 2. This is because the guide element 2 is fixed at a predetermined position and the movable element 3 relatively moves for the guide element 2 in the direction of the extending guide groove. It should be noted that the first guide groove 7 and second guide groove 8 are set to have approximately the same size.

The roller unit 5 includes a plurality of (four in this embodiment) cylindrical rollers 14 showing the first embodiment of the rolling elements and a retainer 15 retaining these cylindrical rollers 14 rolling freely. The cylindrical rollers 14 are preferable for the rolling elements, but the other rolling elements, for example, spherical rollers, balls or the like may also be used.

In the retainer 15, retaining holes 16 for housing the cylindrical rollers 14 are provided at four places that are the same number as the number of the rolling elements. A series of the four retaining holes 16 of the retainer 15 are arranged on the same straight line, and the four cylindrical rollers 14 are retained and roll freely in these retaining holes 16 in a condition where the tilt direction is changed alternately and tilted 45°.

The fixed element 4 is formed of a rectangular frame-shaped element having a concave portion 17 that houses the guide element 2. A long hole 18 extending in the longitudinal direction is provided at approximately a center portion in the width direction on the bottom of the fixed element 4, and bottom portions 19A, 19B are formed on both sides in the width direction of the long hole 18. A positioning pin 21 protruding upward and two fitting pins 22, 22 similarly protruding upward are provided to the respective bottom portions 19A, 19B.

The positioning pin 21 is set up at approximately a center portion in the longitudinal direction in each of the bottom portions 19A, 19B. Further, the two fitting pins 22, 22 are arranged at a predetermined interval at both sides in the longitudinal direction with the positioning pins 21 at the center respectively. These positioning pin 21 and fitting pins 22, 22 are provided corresponding to the positioning hole 10 and fitting holes 11, 11 of the guide element 2, and are configured to fit to each other at the time of assembly.

A pair of spring plates 6A, 6B is attached individually to the bottom portions 19A, 19B symmetrically provided in the fixed element 4. Each of the spring plates 6A, 6B is formed of a rectangular-shaped spring element having approximately the same size as that of the bottom portions 19A, 19B, and a supporting portion 6a is set up at the center portion in the longitudinal direction. Furthermore, pressure contacting portions 6b, 6b are set up at both ends in the longitudinal direction of the respective spring plates 6A, 6B, and elastic portions 6c, 6c that give spring force to the pressure contacting portions 6b, 6b are set up between these pressure contacting portions 6b, 6b and the supporting portion 6a.

Positioning holes 23 formed of round holes are provided respectively at approximately the center of the supporting portion 6a of the respective spring plates 6A, 6B. The positioning pin 21 provided to the fixed element 4 is fitted into each positioning hole 23. A diameter of the positioning hole 23 is made larger than a spindle diameter of the positioning pin 21 so that a deviation for the fitting pin 22 is made to be absorbed by setting a gap of suitable size to the positioning pin 21. Further, clearance holes 24, 24 formed of long holes are provided respectively in the vicinity of the pressure contacting portion 6b of the elastic portion 6c of the respective spring plates 6A, 6B. The fitting pins 22, 22 provided to the fixed element 4 are fitted into each clearance hole 24, 24. The clearance hole 24 is formed as a long hole extended in the longitudinal direction to allow the elastic portions 6c, 6c of the spring plates 6A, 6B to be elastically transformed.

As a material for the guide element 2, movable element 3, fixed element 4 and retainer 15, for example, engineering plastic such as ABS resin (Acrylonitrile Butadiene Styrene resin) or the like is suitable, but aluminum alloy or other metal can also be used. As a material for the spring plates 6A, 6B, metal such as spring steel is suitable, but engineering plastic such as ABS resin or the like may also be used. Further, various materials of stainless steel, carbon steel for structure, super hard alloy, engineering plastic or the like can be used for the cylindrical roller 14.

The linear motion rolling guide device 1 having such configuration can be assembled readily as follows, for example. First, the pair of spring plates 6A, 6B is individually attached to the bottom portions 19A, 19B on the right/left sides of the fixed element 4. Hereupon, in the respective spring plates 6A, 6B, the positioning pin 21 of the respective bottom portions 19A, 19B fits into the positioning hole 23 of the supporting portion 6a, and fitting pins 22, 22 fits into fitting holes 11, 11 on both sides, respectively. Next, the guide element 2 is inserted into the concave portion 17 of the fixed element 4 from above the pair of spring plates 6A, 6B. Subsequently, the positioning pin 21 is fitted into the fitting hole 10 and fitting pins 22, 22 are fitted into the fitting holes 11, 11 respectively.

Here, the fitting hole 11 is a long hole and its longitudinal direction is set in the direction perpendicular to first guide groove 7, so that deviation of the fitting pin 22 for the positioning pin 21 can be absorbed by the long hole and assembly work of the guide element 2 can be carried out easily and quickly.

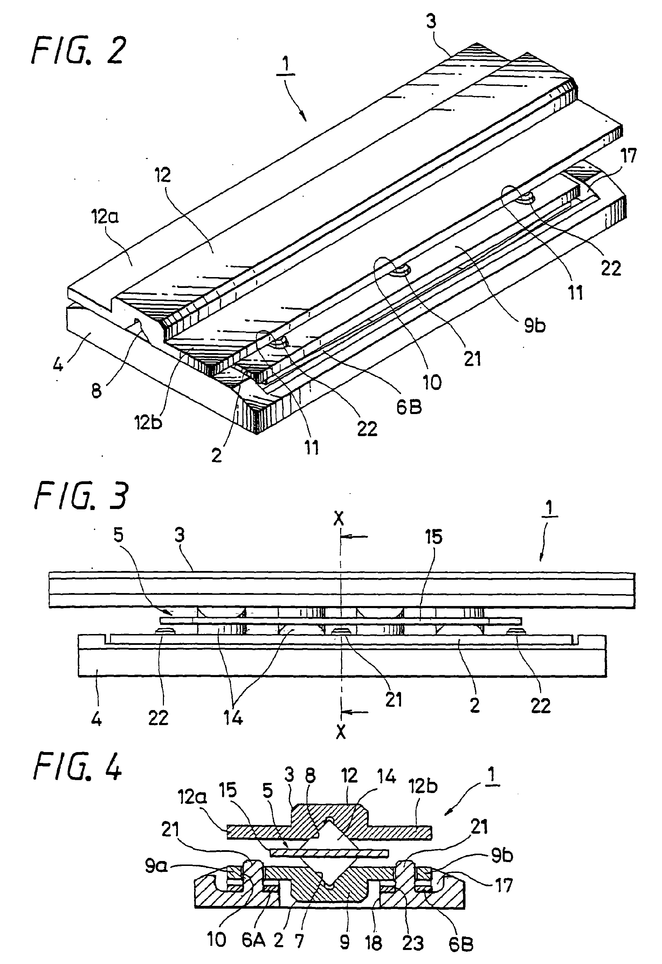

Next, the roller unit 5 retaining the four cylindrical rollers 14 is fitted into the first guide groove 7 of the guide element 2. Subsequently, the movable element 3 is stacked on the guide element 2 and the second guide groove 8 is fitted onto the roller unit 5. Thus, as shown in FIGS. 2 to 4, assembly work is completed and the linear motion rolling guide device 1 is obtained.

According to the linear motion rolling guide device 1 having such configuration, positioning for the spring plates 6A, 6B and the guide element 2 can be performed using the positioning pin 21 and the fitting pin 22 of the fixed element 4. Moreover, because of the configuration in which the two spring plates 6A, 6B are placed between the guide element 2 and the fixed element 4 and the guide element 2 is biased to the movable element 3 with spring force, a predetermined preload determined by the spring force of the two spring plate 6A, 6B can be given to roller unit 5 without cease. As a result, regardless of a position in a moving direction of the roller unit 5, it becomes possible to reduce tilt in a movable direction of the roller unit 5 and guide element 2 and a stable motion can be obtained.

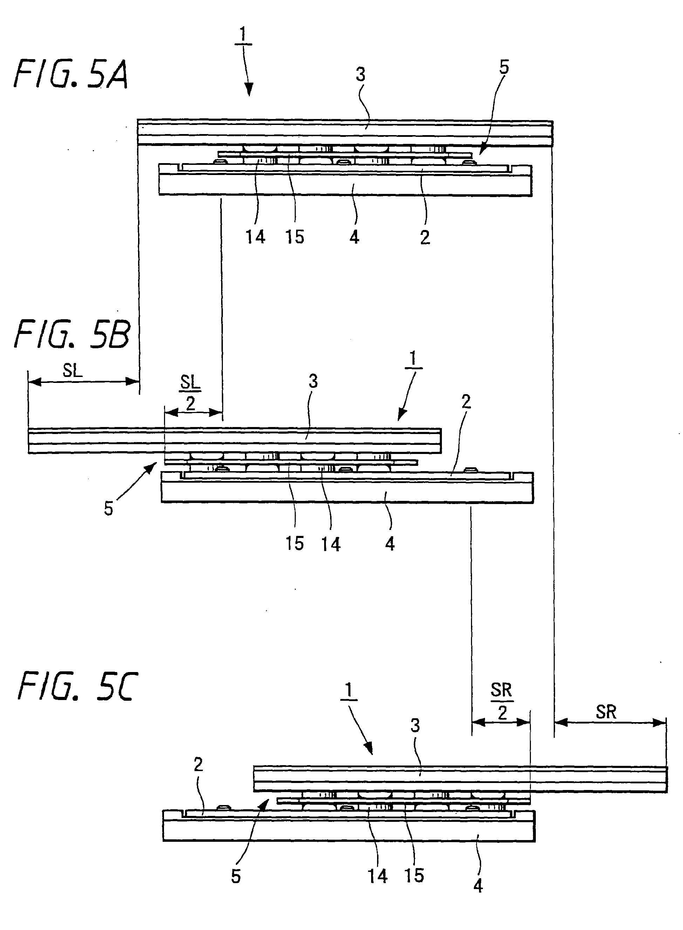

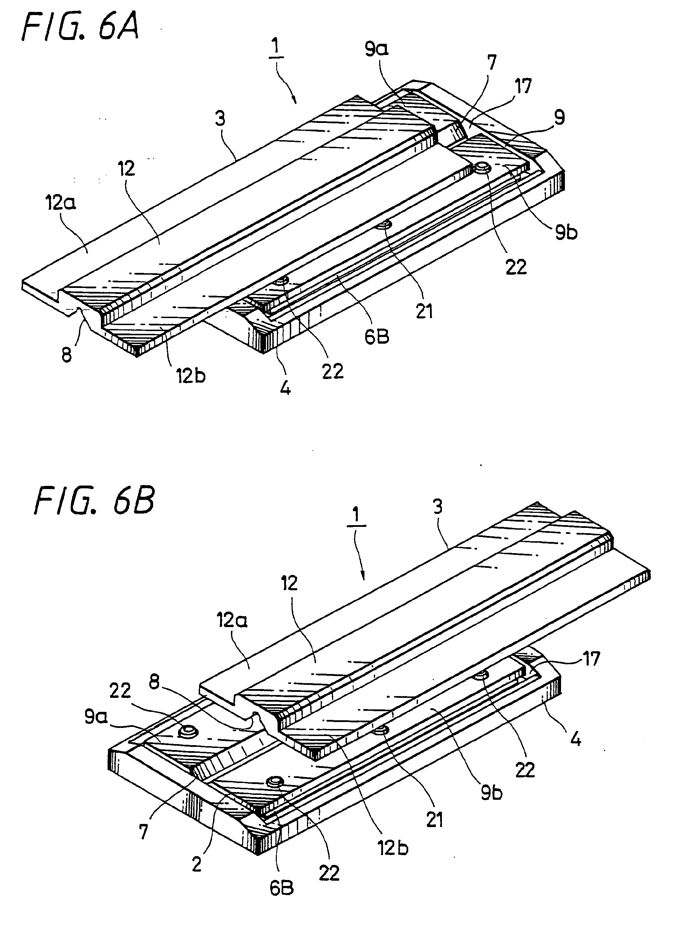

FIG. 5A shows a state where a roller unit 5 locates at the center of a movable stroke of the movable element 3. FIG. 5B and FIG. 6A show a state where the movable element 3 has moved in the left direction in the figure by distance SL. FIG. 5C and FIG. 6B show a state where the movable element 3 has moved in the right direction, that is, in the reverse direction in the figure by distance SR. Here, the moving amount of the roller unit 5 is half the moving amount of the movable element 3 respectively, and the moving amount is SL/2 in the case of FIG. 5B and FIG. 6A and the moving amount is SR/2 in case of FIG. 5C and FIG. 6B.

As shown in FIG. 5B, when the movable element 3 has moved in the left direction in the figure by distance SL, the roller unit 5 is positioned in a state having margin to an end portion of a movable side of the fixed element 4. Here, the roller unit 5 may sink in the lower left direction in the figure by receiving spring force of the pair of spring plates 6A, 6B, but the fitting pin 22 of the fixed element 4 is fitted into the fitting hole 11 of the guide element 2, and tilt of the guide element 2 in the movable direction is controlled using the fitting hole 11. Consequently, such sinking of the roller unit 5 in the lower left direction mentioned above can be avoided. Therefore, preload given to the roller unit 5 can be prevented from being greatly changed, and smooth movement of the movable element 3 can be secured.

Such action and effect are similar in the case where the movable element 3 is moved in the right direction in the figures, as shown in FIGS. 5C and 6B.

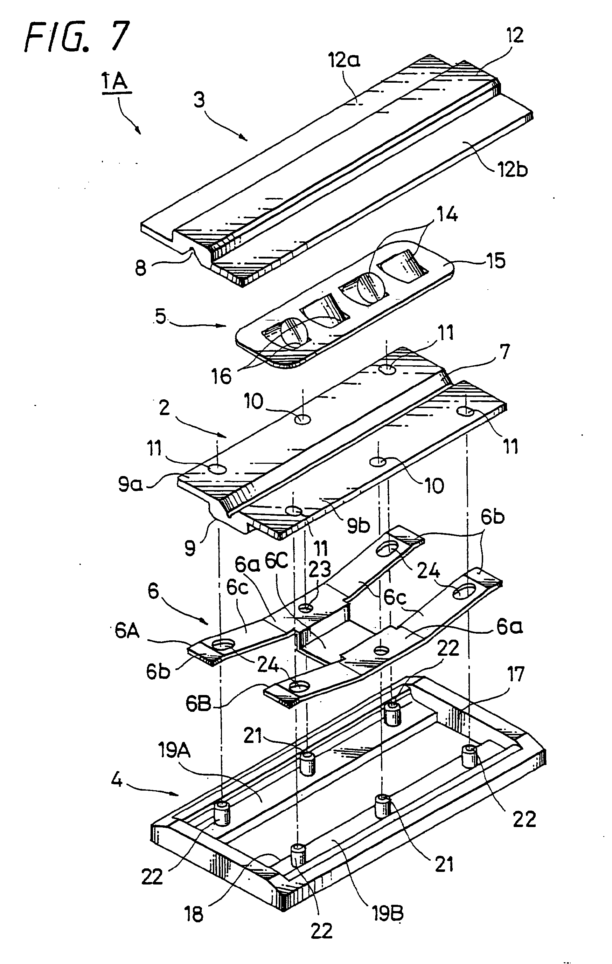

FIG. 7 shows a second embodiment of a liner motion rolling guide device of the present invention. In a liner motion rolling guide device 1A according to the second embodiment, a second example of a preloading element includes one spring plate 6 instead of the pair of spring plates 6A, 6B of two pieces in the aforesaid first embodiment. Since the spring plate 6 of the second embodiment alone is different from that of the aforesaid first embodiment, explanation is given to the spring plate 6, here, and redundant explanation is omitted by assigning the same numerals to the other configurations.

The spring plate 6 includes a pair of elastic supporting portions 6A, 6B and a connecting portion 6C connecting these elastic supporting portions 6A, 6B, and a plane shape is formed to have an "H" shape, as a whole. The pair of elastic supporting portion 6A, 6B is positioned parallel with a predetermined interval, and is made of one spring plate by connecting center portions in the longitudinal direction with the connecting portion 6C. The connecting portion 6C is bended and formed to be "U"-shaped to avoid a convex portion 9 of the guide element 2. The pair of elastic supporting portions 6A, 6B is formed of elastic portions with rectangular shape having approximately the same length as the length of the bottom portions 19A, 19B, and both ends of the connecting portion 6C are connected to the fixed portion 6a set up at a center portion in the longitudinal direction, respectively.

Furthermore, the pressure contacting portions 6b, 6b are set up at both ends in the longitudinal direction of the respective elastic supporting portions 6A, 6B, and the elastic portions 6c, 6c giving spring force to the pressure contacting portion 6b, 6b are set up between the pressure contacting portions 6b, 6b and the fixed portion 6a. The positioning holes 23 formed of a round hole are provided at approximately the center of the fixed portions 6a respectively. The positioning pin 21 provided in the fixed element 4 is fitted into each positioning hole 23. A diameter of the positioning hole 23 is formed larger than a spindle diameter of the positioning pin 21 and deviation for the fitting pin 22 can be absorbed by setting up a gap of suitable size to the positioning pin 21.

Further, the clearance holes 24, 24 formed of a long hole are provided respectively in the vicinity of the pressure contacting portion 6b of the respective elastic portions 6c. The fitting pins 22, 22 provided in the fixed element 4 are fitted into clearance hole 24, 24 respectively. The clearance hole 24 is formed as a long hole extended in the longitudinal direction to allow elastic transformation of the elastic portions 6c, 6c. The other configuration is the same as that of the aforesaid first embodiment. Using the linear motion rolling guide device 1A having such configuration, the effect similar to that in the aforesaid first embodiment can be obtained.

It should be noted that four spring coils may be used as a preloading element, instead of the aforesaid spring coils 6A, 6B and 6, for example, though not shown. Specifically, four same spring coils are attached to the four fitting pins 22, 22 of the fixed element 4. Thus, action and effect that are similar to the aforesaid spring plates 6A, 6B and spring plate 6 can be obtained. Further, an acrylic rubber, silicon rubber, urethane rubber, foamed styrol that are formed into a plate shape or other various rubber elastic member may be used, instead of a spring plate. It should be noted that a convex portion for attaching a spring coil may be provided, instead of the aforesaid fitting pin 22. Furthermore, four spring plates may be used, instead of the four spring coils.

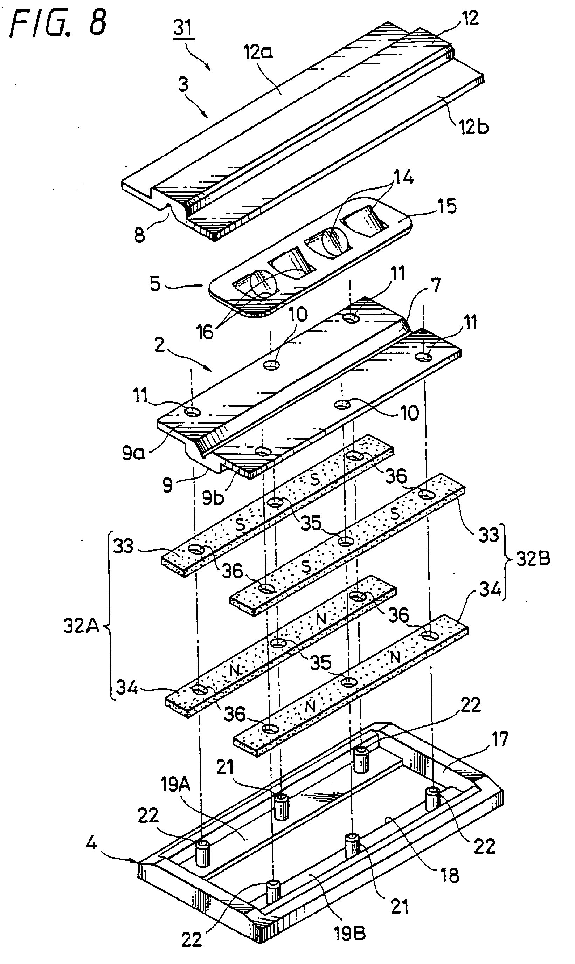

FIG. 8 shows a third embodiment of a linear motion rolling guide device of the present invention. In a linear motion rolling guide device 31 according to the third embodiment, two pairs of permanent magnets 33, 34 are used instead of the pair of spring plates 6A, 6B of two pieces in the aforesaid first embodiment, and a preloading element includes two sets of the plate permanent magnets 32A, 32B. Since only two sets of the plate permanent magnets 32A, 32B of the third embodiment are different from the aforesaid first embodiment, explanation is given to two sets of the plate permanent magnets 32A, 32, here, and redundant explanation is omitted by assigning the same numerals to the other configurations.

More specifically, the linear motion rolling guide device 31 includes: the guide element 2 including the first guide groove 7; the movable element 3 including the second guide groove 8; the fixed element 4 retaining the guide element 2; the roller unit 5 that rolls freely and are placed between the first guide groove 7 and the second guide groove 8; and two sets of the plate permanent magnets 32A, 32B showing a second example of a preloading element.

The plate permanent magnets 32A, 32B are each formed of a first magnetic plate 33 and a second magnetic plate 34, respectively. The first magnetic plate 33 and the second magnetic plate 34 are formed of the same magnet plate, therefore, two sets of the plate permanent magnets 32A, 32B are formed using the four same magnetic plates in this embodiment. Each of the magnetic plates 33, 34 is formed of a rectangular shaped magnet having approximately the same size as the bottom portions 19A, 19B of the fixed element 4, and North pole is set at an entire surface of one face side and South pole is set at an entire surface of the other face side.

Further, a positioning hole 35 is provided at approximately a center portion in the longitudinal direction of the respective magnetic plates 33, 34. The positioning pin 21 provided in the fixed element 4 is fitted into each positioning hole 35. A diameter of the positioning hole 35 is formed larger than a spindle diameter of the positioning pin 21, similarly to the positioning hole 23 in the aforesaid embodiment, and a gap of suitable size is set to the positioning pin 21, thus deviation for the fitting pin 22 can be absorbed.

Further, fitting holes 36, 36 formed of a long hole are provided at both ends of the respective magnetic plates 33, 34. The fitting pins 22, 22 provided in the fixed element 4 are fitted into the fitting holes 36, 36, respectively. The fitting hole 36 is formed as a long hole extended in a direction perpendicular to a direction to which the first guide groove 7 extends, similarly to the fitting hole 11 of the guide element 2.

The linear motion rolling guide device 31 having such configuration can be assembled as follows, for example. First, the second magnetic plates 34, 34 are attached to the right and left bottom potions 19A, 19B of the fixed element 4, respectively. Here, the second magnetic plates 34, 34 are placed with the same pole (N pole, for example) facing upward and the positioning pin 21 of the respective bottom portions 19A, 19B is fitted into the positioning hole 35 at the center and the fitting pins 22, 22 are fitted into the fitting holes 36, 36 on both sides, respectively.

Furthermore, it is desirable that the second magnetic plates 34, 34 are fixed to the bottom portions 19A, 19B using a fixing means such as adhesive, but in the case where repulsive force of a permanent magnet is used as described above, the positioning pin 21 may be fitted into the positioning hole 35 without using the fixing means.

Next, the guide element 2 on which the pair of first magnetic plates 33, 33 is fixed in advance is stacked on the pair of second magnetic plates 34, 34. Here, the pair of first magnetic plates 33, 33 is arranged to repel from the pair of second magnetic plates 34, 34 and so the N poles are faced each other. It should be appreciated that a polarity may be reversed and arranged between the left/right magnetic plates 33, 33 and 34, 34, as long as a combination causes repulsive force.

Further, the pair of first magnetic plates 33, 33 is fixed to the left/right eaves portions 9a, 9b of the guide element 2 using a fixing means such as adhesive or the like at both sides of the convex portion 9 on a surface having the convex portion 9 that is a surface reverse to the surface where the first guide groove 7. Here, the positioning hole 35 of the first magnetic plate 33 is positioned to correspond with the fitting hole 10 of the respective eaves portions 9a, 9b, and the fitting holes 36, 36 on both sides are positioned to correspond with the fitting holes 11, 11 of the respective eaves portions 9a, 9b.

As described above, the guide element 2 with the pair of first magnetic plates 33, 33 integrated is inserted into the concave portion 17 of the fixed element 4 from above the pair of first magnetic plates 33, 33. Subsequently, the positioning pin 21 is fitted into the positioning holes 35, 10 and the fitting pins 22, 22 on both sides are fitted into the fitting holes 36, 11, respectively.

In such case, the fitting hole 36 and fitting hole 11 corresponding with each other are long holes and the longitudinal direction thereof is set up in the direction perpendicular to the first guide groove 7, and so deviation of the fitting pin 22 for the positioning pin 21 can be absorbed by the long hole and assembly work of the guide element 2 can be performed easily and quickly.

Subsequently, similarly to the aforesaid embodiment, the roller unit 5 retaining four cylindrical rollers 14 is fitted into the first guide groove 7 of the guide element 2. Subsequently, the movable element 3 is stacked on the guide element 2 and the second guide groove 8 is fitted into the roller unit 5. Thus, assembly work is completed and the linear motion rolling guide device 31 is obtained. It should be noted that a magnetic member such as an electromagnet, magnetic induction coil or the like may be used instead of a permanent magnet.

According to the linear motion rolling guide device 31 having such configuration, in two sets of the plate permanent magnets 32A, 32B that are placed between the fixed element 4 and the guide element 2, the first magnetic plates 33 and second magnetic plates 34 are each paired and arranged to repel, so that preload of suitable strength can be given to the roller unit 5 using repulsive force of the pair of magnetic plates, similarly to the aforesaid spring plates 6A, 6B. Accordingly, similarly to the aforesaid embodiment, sinking of the roller unit 5 can be avoided and preload applied to the roller unit 5 is prevented from largely changing, thereby securing a smooth motion of the movable element 3.

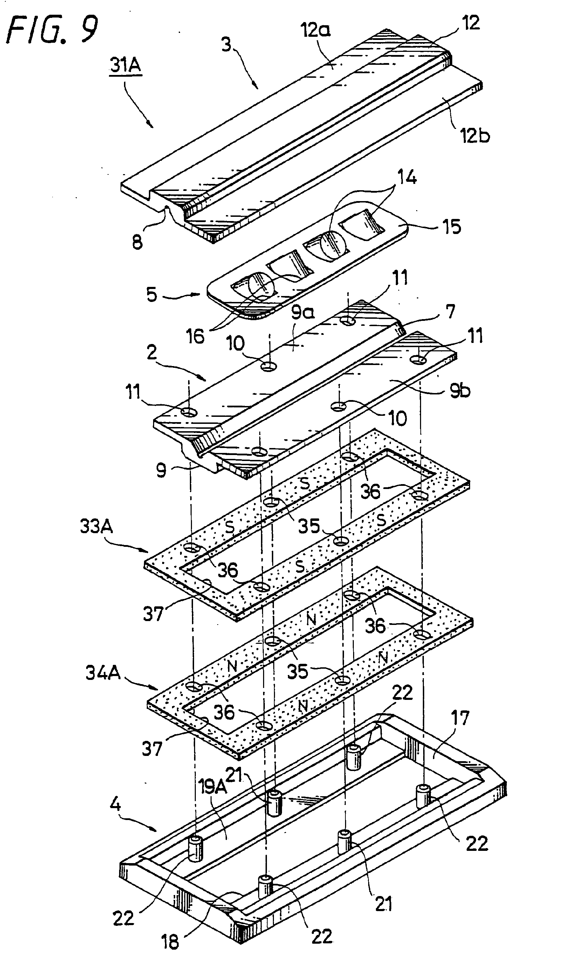

FIG. 9 shows a fourth embodiment of a linear motion rolling guide device of the present invention. In a linear motion rolling guide device 31A according to the fourth embodiment, a fourth example of a preloading element includes one set of frame shaped permanent magnets 33A, 34A which forms a pair with two pieces, instead of two sets of plate permanent magnets 32A, 32B each of which is paired according to the third embodiment. Since the pair of frame shaped permanent magnets 33A, 34A of the fourth embodiment alone is different from the aforesaid third embodiment, and so explanation is given to the pair of frame shaped permanent magnets 33A, 34A, here, and redundant explanation is omitted by assigning the same numerals to the other configurations.

As shown in FIG. 9, the pair of framed permanent magnets 33A, 34A includes two magnetic member each having a frame shape that has the same shape and size. Each of the frame shaped permanent magnets 33A (and 34A) are made rectangular, and a rectangular opening 37 extended in the longitudinal direction is provided at the center portion thereof. Subsequently, one positioning hole 35 and two fitting holes 36, 36 are provided at a corresponding position in a long side portion of the frame shaped permanent magnets 33A (and 34A), similarly to the aforesaid plate permanent magnets 32A, 32B as described above.

The opening 37 of the frame shaped permanent magnets 33A, 34A is made to be size suitable for the convex portion 9 of the guide element 2 and assembly is performed by fitting the convex portion 9 into the opening 37. If necessary, the first frame shaped permanent magnet 33A is fixed to the guide element 2 and the second frame shaped permanent magnet 34A is fixed to the guide element 4.

The other configurations are the same as those of the aforesaid third embodiment. With the linear motion rolling guide device 31A having such configuration, the same effect as the aforesaid third embodiment can be obtained.

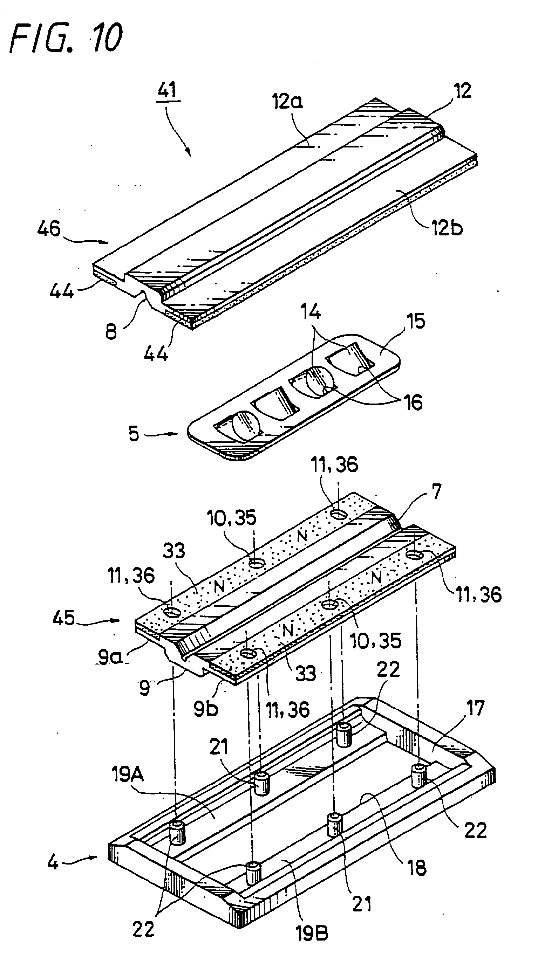

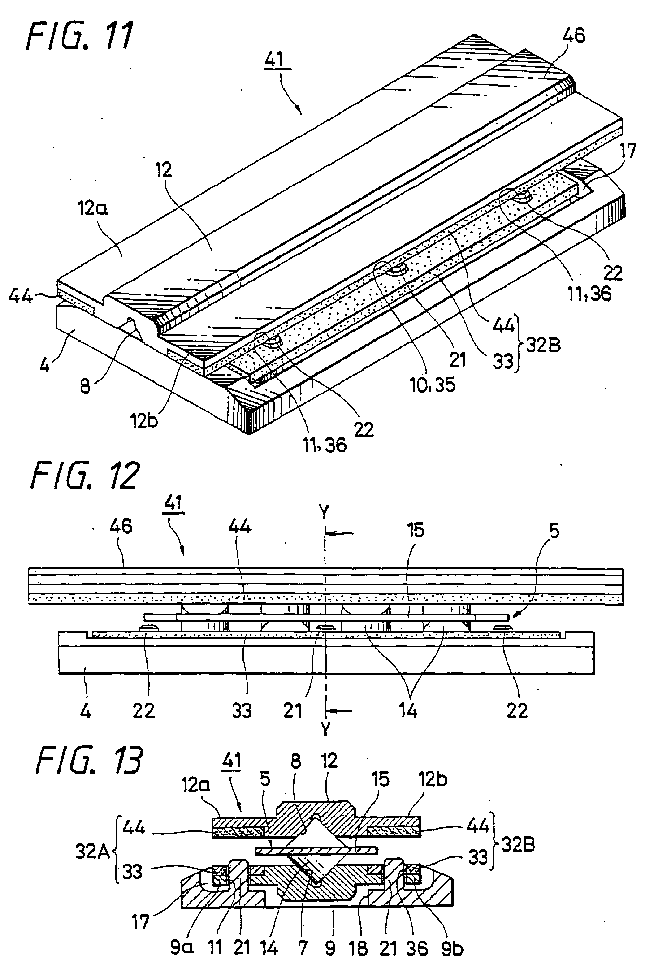

FIGS. 10 to 13 show a fifth embodiment of a linear motion rolling guide device of the present invention. In a linear motion rolling guide device 41 according to the fifth embodiment, the pair of second magnetic plates 34, 34 constituting one component of the two sets of plate permanent magnets 32A, 32B of the linear motion rolling guide device 31 in the aforesaid third embodiment is fixed to the movable element 3.

The linear motion rolling guide device 41 according to the fifth embodiment is different from the linear motion rolling guide device 31 according to the aforesaid third embodiment in such points that a pair of second magnetic plates 44, 44 is provided to a movable element 46 and the shape of a guide element 45 is partly changed corresponding thereto. Therefore, configurations of two sets of the plate permanent magnets 32A, 32B (each formed of the first magnetic plate 33 and the second magnetic plate 44), guide element 45 and movable element 46 are here explained, and redundant explanation is omitted by assigning the same numerals to the other configurations.

Specifically, the linear motion rolling guide device 41 includes: the guide element 45 including the first guide groove 7; the movable element 46 including the second guide groove 8; the fixed element 4 retaining the guide element 45; the roller unit 5 that rolls freely and are placed between the first guide groove 7 and second guide groove 8; and two sets of the plate permanent magnets 32A, 32B (first magnetic plates 33 and second magnetic plates 44) that make a preloading element.

The guide element 45 has approximately the same shape as the guide element 2 in the aforesaid embodiment, but there is a difference that concave portions for housing the first magnetic plates 33 are provided on the side of the first guide groove 7 at the eaves portions 9a, 9b respectively, and the two first magnetic plates 33 are attached to the concave portions to be integrally formed. The two first magnetic plates 33 are fixed using a fixing means such as adhesive. Hereupon, the positioning hole 35 of the first magnetic plate 33 is made to correspond with the positioning hole 10 of the eaves portion 9a (or 9b) and the fitting holes 36, 36 on both sides are made to correspond with fitting hole 11 of the eaves portion 9a (or 9b).

The movable element 46 has approximately the same shape as the movable element 3 in the aforesaid embodiment, but there is a difference such that concave portions for housing the second magnetic plates 44 are provided on the side of the second guide groove 8 at the eaves portions 12a, 12b respectively, and the two second magnetic plates 44 are attached to the concave portions to be integrally formed. In this case, polarity of the first magnetic plates 33 and polarity of the second magnetic plates 44 may be set to pull each other or repel from each other. The reason is that balance in the left/right direction can be obtained by employing any combination of the aforementioned polarity, because two sets of the plate permanent magnets 32A, 32B are arranged symmetrically with the first and second guide grooves 7, 8 in between.

The linear motion rolling guide device 41 having such configuration can be assembled more easily as follows, for example. First, the guide element 45 is attached to the fixed element 4. Here, the pair of positioning pins 21, 21 of the fixed element 4 is fitted into the pair of positioning holes 10, 35 of the guide element 45 and the two pairs of fitting pins 22, 22 are fitted into the two pairs of fitting holes 11, 36. Next, the roller unit 5 retaining four cylindrical rollers 14 is fitted into the first guide groove 7 of the guide element 45. Subsequently, the movable element 46 is stacked on the guide element 45 and the second guide groove 8 is fitted into the roller unit 5. Thus, assembly work is completed and the linear motion rolling guide device 41 is obtained.

According to the linear motion rolling guide device 41 having such configuration, in the two sets of plate permanent magnets 32A, 32B that are placed between the guide element 45 and the movable element 46, because the first magnetic plates 33 and the second magnetic plates 44 that respectively make a pair are arranged to repel from each other or pull each other, preload of suitable strength can be given to the roller unit 5 using repulsive force or pulling force of a pair of permanent magnets, similarly to the case where the aforesaid spring plates 6A, 6B and the aforesaid magnetic plates 33, 34 are used. Accordingly, similarly to the aforesaid embodiment, sinking of the roller unit 5 can be avoided and the preload applied to the roller unit 5 is prevented from changing largely, thereby securing a smooth motion of the movable element 46.

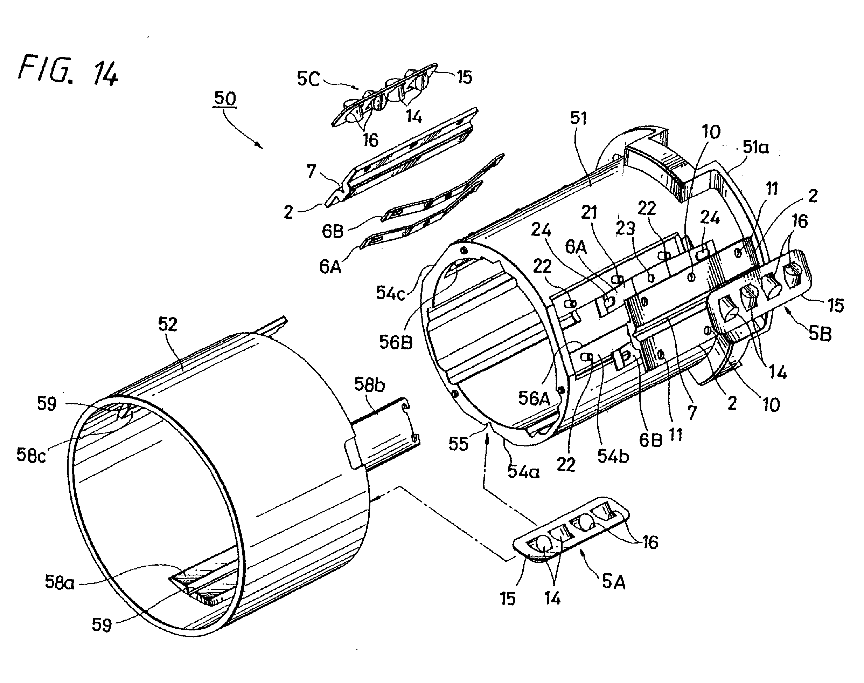

FIG. 14 shows an embodiment using the linear motion rolling guide device 1 according to the aforesaid first embodiment as a lens barrel 50. The lens barrel 50 includes: a fixed lens barrel 51 showing a specific example of a guide element; a movable lens barrel 52 showing a specific example of a movable element slidably retained by the fixed lens barrel 51; and three roller units 5A, 5B, 5C that are placed between the fixed lens barrel 51 and the movable lens barrel 52.

The fixed lens barrel 51 is formed of a circular cylinder, and a flange portion 51a expanded to the outside in the radius direction is provided at one end in the axis direction. Three plane portions 54a, 54b, 54c where planes are made within a predetermined range are provided at three places on the outer circumferential surface of the fixed lens barrel 51. The three plane portions 54a to 54c are arranged at equal angle intervals and an inner cylinder guide groove 55 that is a first guide groove is provided at the first plane portion 54a, and rectangular openings 56A, 56B are respectively provided at the second and third plane portions 54b, 54c.

The inner cylinder guide groove 55 is extended linearly to be parallel with an axis direction of the fixed lens barrel 51, and the sectional shape thereof is "V"-shaped and guide surfaces being tilted 45° on both sides respectively are provided. One surface of the roller unit 5A is fitted into the inner cylinder guide groove 55.

The positioning pin 21 and the two fitting pins 22, 22 are linearly provided at predetermined intervals in the axis direction at edge portions respectively on both sides in the width direction (circumferential direction) of the two openings 56A, 56B of the fixed lens barrel 51. The pair of spring plates 6A, 6B is attached to the edge portion of the respective openings 56A, 56B by fitting the positioning hole 23 and the clearance hole 24 into these pins 21, 22.

The guide element 2 is provided above those pairs including the spring plates 6A, 6B respectively in a condition where the first guide grooves 7 each face outside. One surface of each of the roller units 5B and 5C is fitted into the guide groove 7 of each guide element 2. It should be noted that the three roller units 5A to 5C have the same size and configuration as the roller unit 5 mentioned in the aforesaid embodiment.

The movable lens barrel 52 is formed of a circular cylinder has a diameter larger than the fixed lens barrel 51, and the fixed lens barrel 51 is inserted inside of the movable lens barrel 52 with a predetermined gap. Protrusions 58a, 58b and 58c that protrude toward the inside in the radius direction are provided at three places of an inner circumferential surface of the movable lens barrel 52. Parts of the three protrusions 58a to 58c protrude toward the outside in the axis direction from one end of the movable lens barrel 52. The three protrusions 58a to 58c are arranged in the circumferential direction at equal intervals, and an outer cylinder guide groove 59 that is the second guide groove continued in the axis direction is provided at approximately a center portion of each inside surface.

The outer cylinder guide groove 59 is extended linearly to be parallel with the axis direction of the movable lens barrel 52, and the section thereof is "V"-shaped and guide surfaces being tilted 45° on both sides respectively are provided. The other side of the roller units 5A, 5B, 5c is fitted into the outer cylinder guide groove 59, respectively. Specifically, the outer cylinder guide grooves 59 of three places faces the inner cylinder guide groove 55 of the fixed lens barrel 51 and the first guide grooves 7, 7 of the two guide elements 2, 2 attached to the fixed lens barrel 51, respectively, and between the inner/outer guide grooves 7, 59 and between the guide grooves 55, 59, the roller units 5A, 5B, 5C are placed and roll freely, respectively.

Although not shown in FIG. 14, with respect to the fixed lens barrel 51 and the movable lens barrel 52, a driving means for moving the movable lens barrel 52 forward/backward in the axis direction is provided to the fixed lens barrel 51. The driving means may be formed of a combination of a coil and a permanent magnet, for example. For example, a coil is wound around the outer circumferential surface of the fixed lens barrel 51 and a permanent magnet is fixed on the inner circumferential surface of the movable lens barrel 52. With such configuration and upon supplying power to the coil to generate electromagnetic force, the movable lens barrel 52 can move forward/backward.

According to the embodiment, the movable lens barrel 52 is supported by the roller units 5A, 5B, 5C at three places in the circumferential direction to freely roll, and the guide element 2 and the spring plates 6A, 6B that represent preloading elements are arranged at two of the three places respectively; and the two guide elements 2 are biased to the roller units 5B, 5C by spring forces of the spring plates 6A, 6B. Thus, the position of the movable lens barrel 52 is determined for the fixed lens barrel 51 by the roller unit 5A at one place and suitable preloads are applied to the roller units 5B, 5C by the guide element 2 and the spring plates 6A, 6B, at the other two places, so that pressure on the whole structure can be balanced.

More specifically, approximately uniform preload can be supplied to the roller units 5A, 5B, 5C at three places by spring force of the spring plates 6A, 6B that acts from two directions. Accordingly, sinking of the roller units 5A to 5C can be avoided in the case in which the roller units 5A to 5C are at any position in the moving direction, and preloads applied to the roller units 5A to 5C are prevented from changing largely, thereby moving the movable lens barrel 52 smoothly and accurately.

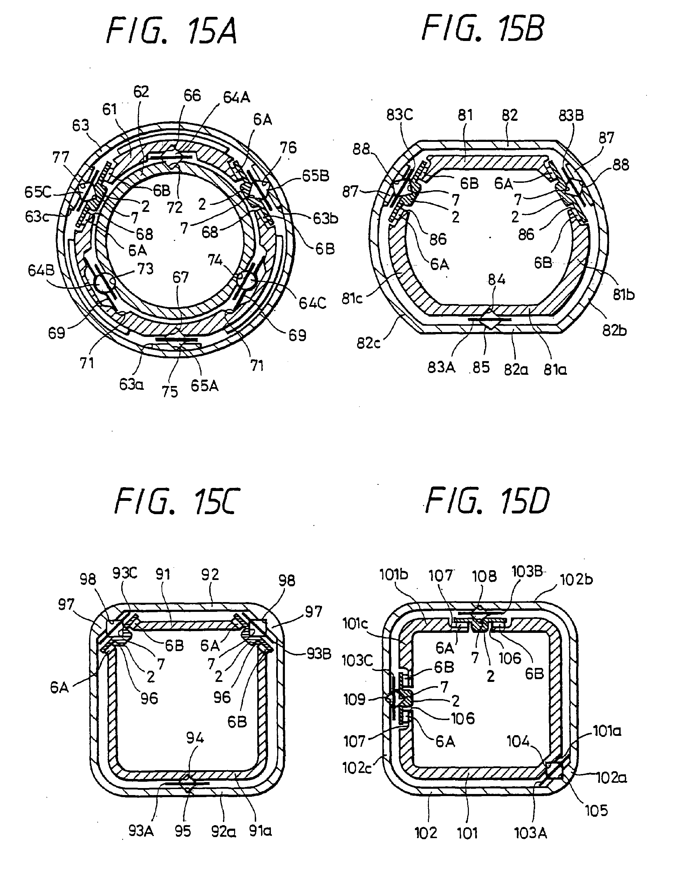

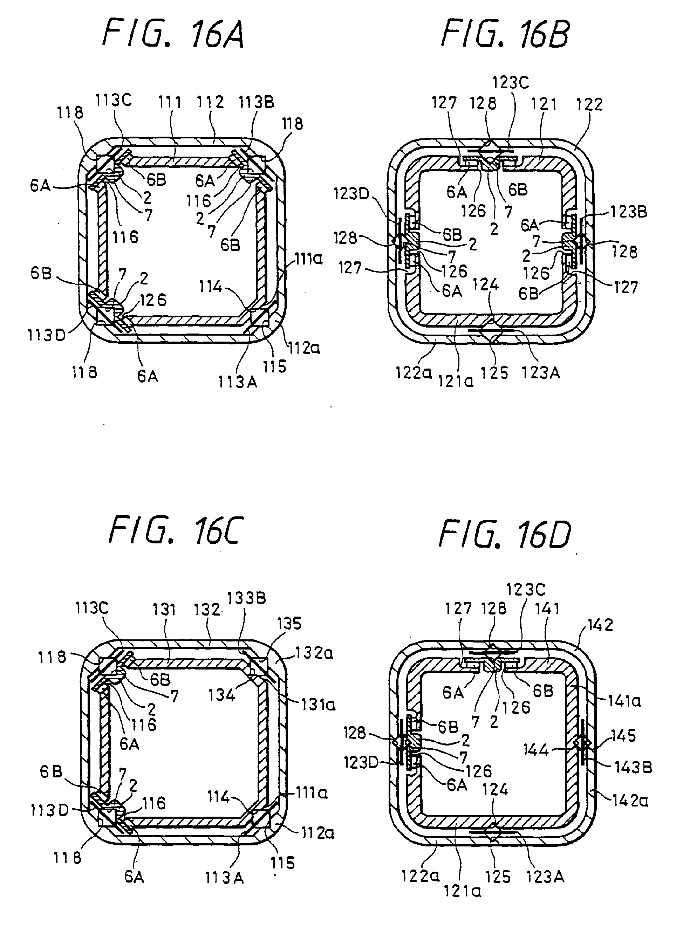

FIGS. 15A to 15D and FIGS. 16A to 16D show other examples of the shape of a fixed element and a movable element, a supporting method, and the like of linear motion rolling guide devices of the present invention. It should be noted that the same symbols are assigned to the same portions in the examples shown in FIGS. 15A to 15D and FIGS. 16A to 16D to be explained.

The example shown in FIG. 15A has a configuration in which movable lens barrels 62, 63 are arranged at inside and outside of a fixed lens barrel 61 and the inner movable lens barrel 62 and the outer movable lens barrel 63 are supported respectively through three sets of inner roller units 64A, 64B, 64C and three sets of outer roller units 65A, 65B, 65C. The three sets of inner roller units 64A to 64C and the three sets of outer roller units 65A to 65C are respectively arranged at equal intervals (120°) in the circumferential direction. In addition, the inner roller units 64A to 64C and the outer roller units 65A to 65C are arranged at position rotated and displaced 60° respectively.

In order to realize the above, two inner/outer guide grooves 66, 67 continued in the axis direction, two openings 68, 68 for retaining the two guide elements 2, 2 and two concave portions 71, 71 for retaining two guide elements 69, 69 are provided to the fixed lens barrel 61. The inner guide groove 66 is provided at the inner circumferential surface of the fixed lens barrel 61, and the outer guide groove 67 is provided at the outer circumferential surface of the fixed lens barrel 61 and those are set at positions rotated and displaced 180° from each other. The outer guide groove 67 is a reference portion to determine a relative position among the fixed lens barrel 61 and the inner/outer movable lens barrels 62, 63. Two concave portions 71, 71 are set at the inner circumferential surface of the fixed lens barrel 61 at positions rotated and displaced 60° on both sides of the outer guide groove 67 and two openings 68, 68 are opened at positions further rotated and displaced 60° on both sides thereof.

Three guide grooves 72, 73, 74 continuing in the axis direction are provided at three places of the outer circumferential surface of the outer movable lens barrel 62, corresponding to the fixed lens barrel 61. The three guide grooves 72 to 74 are arranged at equal intervals in the circumferential direction and the section of the first guide groove 72 is "V"-shaped, but the section of the other first and second guide grooves 73, 74 are half-circle. The first guide groove 72 faces the inner guide groove 66 of the fixed lens barrel 61, and the first inner roller unit 64A that rolls freely is placed between the guide grooves 66, 72. The second and third guide grooves 73, 74 face the two concave portions 71, 71 of the fixed lens barrel 61, and the second and third inner roller units 64B, 64C that roll freely are placed between the guide plates 69 retained by the concave portions 71 and the grooves, respectively.

Rolling elements of the second and third inner roller units 64B, 64C are balls in the embodiment. However, cylindrical rollers also may be used as the rolling elements similar to the other roller units, or all rolling elements may be balls. Further, only in the example of FIG. 15A, balls are used as the rolling elements, but it should be appreciated that a ball or others having a different shape can also be used as the rolling element in all the examples shown in FIGS. 15A to 15D and FIGS. 16A to 16D, and optionally-shaped rolling elements may be used in combination.

Further, corresponding to the fixed lens barrel 61, protrusions 63a, 63b, 63c that protrude toward the inside in the radius direction are provided at three places on the inner circumferential surface of the outer movable lens barrel 63. Three guide grooves 75, 76, 77 continuing in the axis direction are provided at inner surfaces of the three protrusions 63a to 63c. The three guide grooves 75 to 77 are arranged at equal intervals in the circumferential direction and the section thereof is "V"-shaped. The first guide groove 75 faces the outer guide groove 67 of the fixed lens barrel 61, and the first outer roller unit 65A that rolls freely is placed between the guide grooves 67, 75.

The second and third guide grooves 76, 77 face the two openings 68, 68 of the fixed lens barrel 61, and the second and third outer roller units 65B, 65C that roll freely are placed between the guide elements 2 retained by the openings 68 and the grooves, respectively. Further, the pair of spring plates 6A, 6B representing a preloading element is placed between the two guide elements 2, 2 and supporting portions that are edge portions of the openings 68 of the fixed lens barrel 61 that support the preload elements, respectively. The two guide elements 2, 2 are biased toward the outside in the radius direction by the two sets of spring plates 6A, 6B, thereby giving approximately uniform preload of predetermined strength to the six roller units 64A to 64C and 65A to 65C.

With the above-descried configuration, similar to the aforesaid embodiments, an approximately uniform preload can be supplied to the six roller units 64A, 64B, 64C and roller units 65A, 65B, 65C by spring force of the spring plates 6A, 6B that act from two directions. Accordingly, sinking of the roller units can be avoided in the case where roller units are at any positions in the moving direction and preload applied to the roller units can be prevented from changing largely, thereby moving the inner/outer movable lens barrels 62, 63 smoothly and securely.

FIG. 15B shows an example in which a fixed lens barrel 81 and a movable lens barrel 82 are oval-shaped (two portions of a circle are made to be two mutually parallel sides.) and are supported by three roller units 83A, 83B, 83C by arranging the movable lens barrel 82 with a predetermined gap on the outside of the fixed lens barrel 81. The fixed lens barrel 81 and the movable lens barrel 82 are arranged so that respective plane portions are positioned at the top and bottom, and the first roller unit 83A that becomes reference by which positioning between both the lens barrels 81, 82 is performed is set up at the center portion of bottom plane portions 81a, 82a.

A guide groove 84 whose section is "V"-shaped and continues in the axis direction is provided at the outer surface of the bottom plane portion 81a of the fixed lens barrel 81. Corresponding to the guide groove 84, a guide groove 85 whose section is similarly "V"-shaped and continues in the axis direction is provided at an inner surface of the bottom plane portion 82a of the movable lens barrel 82. In addition, the first roller unit 83A that rolls freely is placed between the guide grooves 84, 85.

Further, the second roller unit 83B is arranged on the upper portion of an arc surface on one side of the fixed lens barrel 81 and the movable lens barrel 82, and the third roller unit 83C is arranged on the upper portion of an arc surface on the other side of the fixed lens barrel 81 and the movable lens barrel 82. Hence, openings 86, 86 where the guide element 2 is housed are provided respectively on the upper portions of the both arc surfaces 81b, 81c of the fixed lens barrel 81. Corresponding to the openings 86, 86, protrusions 87 that protrude toward the inside in the radius direction are provided respectively on the upper portions of the both arc surfaces 82b, 82c of the movable lens barrel 82. A guide groove 88 whose section is "V"-shaped and continues in the axis direction is provided at an approximately center portion on the inner surface of each protrusion.

The second roller unit 83B and the third roller unit 83C that roll freely are placed respectively between the two guide grooves 88, 88 of the movable lens barrel 82 and the two guide groove 7, 7 of the two guide elements 2, 2 retained by the fixed lens barrel 81. Further, two sets of spring plates 6A, 6B that are preloading elements are placed between the two guide elements 2, 2 and the fixed lens barrel 81. Two guide elements 2, 2 are biased toward the outside in the radius direction respectively by the spring plates 6A, 6B, thereby giving approximately uniform preload of predetermined strength to the first to third roller units 83A to 83C.

In such case, because the three roller units 83A to 83C are arranged at equal intervals in the circumferential direction, preload of approximately the same strength as the other roller units 83B, 83C can be given to the roller unit 83A with a structure where the spring plate is not used.

With the above-described configuration, approximately uniform preload can be given to the three roller units 83A, 83B, 83C by spring force of the spring plates 6A, 6B that act from two directions, similarly to the aforesaid embodiments. Accordingly, sinking of the roller units can be avoided in the case where the roller units 83A to 83C are at any positions in the moving direction and preload applied to the roller units can be prevented from changing largely, thereby moving the movable lens barrel 82 smoothly and securely.

FIG. 15C shows an example in which the fixed lens barrel 81 and the movable lens barrel 82 that are shown in FIG. 15B are made to be a quadrilateral fixed lens barrel 91 and a quadrilateral movable lens barrel 92 and three roller units 93A, 93B, 93C are placed between both the lens barrels. In FIG. 15C, a guide groove 94 whose section is "V"-shaped and continues in the axis direction is provided at approximately the center portion on the outer surface of a bottom surface portion 91a of the fixed lens barrel 91, and a corresponding guide groove 95 whose section is "V"-shaped and continues in the axis direction is provided at approximately the center portion of the inner surface of a bottom surface portion 92a of the movable lens barrel 92. In addition, the first roller unit 93A that rolls freely is placed between the guide grooves 94, 95.

The second roller unit 93B is arranged at one upper corner of the fixed lens barrel 91 and the movable lens barrel 92, and the third roller unit 93C is arranged at the other upper corner of the fixed lens barrel 91 and the movable lens barrel 92. Hence, openings 96, 96 for storing the guide elements 2 are provided respectively at both the upper corners of the fixed lens barrel 91. Corresponding to the openings 96, 96, thick portions 97 having a suitable thickness are provided respectively at the inside of both the upper corners of the movable lens barrel 92. A guide groove 98 whose section is "V" -shaped and continues in the axis direction is provided at approximately the center portion at the inside of each thick portion 97.

The second roller unit 93B and the third roller unit 93C that rolls freely are placed between the two guide grooves 98, 98 of the movable lens barrel 92 and the two guide grooves of the two guide elements 2, 2 retained by the fixed lens barrel 91, respectively. Furthermore, two sets of spring plates 6A, 6B that are preloading elements are placed between the two guide elements 2, 2 and the fixed lens barrel 91. The two guide elements 2, 2 are biased toward the outside respectively by the spring plates 6A, 6B, thereby giving approximately uniform preload of predetermined strength to the first to third roller units 93A to 93C.

In such case, because the three roller units 93A to 93C are arranged symmetrically with the first roller unit 93A as a center, preload of approximately the same strength can be given to the three roller units 93A to 93C in a structure where a spring plate is not used for one place representing the center thereof.

FIG. 15D shows an example in which arrangement of the three roller units 93A, 93B, 93C shown in FIG. 15C is changed, and the shapes of the fixed lens barrel 91 and the movable lens barrel 92 are the same. In FIG. 15D, a guide groove 104 whose section is "V"-shaped and continues in the axis direction is provided at the outer surface of approximately the center portion at one lower corner 101a of a fixed lens barrel 101, and a corresponding guide groove 105 whose section is "V"-shaped and continues in the axis direction is provided at the inner surface of approximately the center portion at one lower corner 102a of a movable lens barrel 102. In addition, a first roller unit 103A that rolls freely is placed between the guide grooves 104, 105.

A second roller unit 103B is arranged on a top surface portion of the fixed lens barrel 101 and the movable lens barrel 102, and a third roller unit 103C is arranged on a side surface portion opposite to the side where the guide grooves 104, 105 of the fixed lens barrel 101 and the movable lens barrel 102 are provided. Accordingly, openings 106, 106 and concave portions 107, 107 where the guide grooves 2 are housed are provided respectively at approximately the center portion of a top surface portion 101b and approximately the center portion of a side surface portion 101c of the fixed lens barrel 101. Corresponding to the openings 106, 106 or the like, guide grooves 108, 109 whose section is "V"-shaped and continues in the axis direction are provided respectively at the inside of approximately the center portion of a top surface portion 102b and approximately the center portion of a side surface portion 102c of the movable lens barrel 102.

The second roller unit 103B and third roller unit 103C that roll freely are placed between the two guide grooves 108, 109 of the movable lens barrel 102 and the guide grooves 7, 7 of the two guide elements 2, 2 retained by the fixed lens barrel 101, respectively. Further, two sets of spring plates 6A, 6B that are preloading elements are placed between the two guide elements 2, 2 and the fixed lens barrel 101. The two guide elements 2, 2 are biased toward the outside respectively by the spring plates 6A, 6B, thereby giving approximately equal preload of predetermined strength to the first to third roller units 103A to 103C.

In such case, because the three roller units 103A to 103C are arranged symmetrically in the diagonal line direction with the first roller unit 103A as the center, preload of approximately the same strength can be given to the three roller units 103A to 103C in a structure where a spring plate is not used for one place representing the center thereof.

FIG. 16A shows an example in which a fixed lens barrel 111 and a movable lens barrel 112 are made to be a regular square, and four roller units 113A, 113B, 113C, 113D are arranged at four corners. In FIG. 16A, a guide groove 114 whose section is "V"-shaped and continues in the axis direction is provided at the outer surface of approximately the center portion of one lower corner 111a of the fixed lens barrel 111, and a corresponding guide groove 115 whose section is "V"-shaped and continues in the axis direction is provided at the inner surface of approximately the center portion of one lower right corner 112a of the movable lens barrel 112. In addition, the first roller unit 113A that rolls freely is placed between the guide grooves 114, 115.

The second roller unit 113B is arranged at the upper right corner of the fixed lens barrel 111 and the movable lens barrel 112, and the third roller unit 113C is arranged at the upper left corner of the fixed lens barrel 111 and the movable lens barrel 112, and the forth roller unit 113D is arranged at the lower left corner of the fixed lens barrel 111 and the movable lens barrel 112. Accordingly, openings 116, 116, where the guide element 2 is housed, are provided respectively at the three corners except the lower right corner 112a of the fixed lens barrel 111. Corresponding to the openings 116, a guide groove 118 whose section is "V"-shaped and continues in the axis direction is provided respectively to the other three corners except the lower right corner of the movable lens barrel 112.

The second roller unit 113B, third roller unit 113C and fourth roller unit 113D that roll freely are placed at three places between the three guide grooves 118 of the movable lens barrel 112 and guide grooves 7 of the three guide elements 2 retained by the fixed lens barrel 111. Further, three sets of spring plates 6A, 6B that are preloading elements are placed between the three guide elements 2 and the fixed lens barrel 111, respectively. The three guide elements 2, 2 are biased toward the outside respectively by the spring plates 6A, 6B, thereby giving approximately equal preload of predetermined strength to the first to fourth roller units 113A to 113D.

In such case, because the four roller units 113A to 113D are arranged symmetrically in the diagonal direction with the first roller unit 113A as the center, preload of approximately the same strength can be given to the four roller units 113A to 113D in a structure where a spring plate is not used for one place representing the center.

FIG. 16B shows an example in which arrangement of the four roller units 113A, 113B, 113C, 113D shown in FIG. 16A is changed. More specifically, the four roller units 113A to 113D are arranged at four corners of the fixed lens barrel 111 and the movable lens barrel 112 that are regular squares in the example of FIG. 16A, but four roller units 123A to 123D are arranged at approximately the center portions of four plane portions of a fixed lens barrel 121 and a movable lens barrel 122 in this example.

As shown in FIG. 16B, a guide groove 124 whose section is "V"-shaped and continues in the axis direction is provided at the outer surface of approximately the center portion of a bottom surface portion 121a of the fixed lens barrel 121, and a corresponding guide groove 125 whose section is "V"-shaped and continues in the axis direction is provided at the inner surface of approximately the center portion of a bottom surface portion 122a of the movable lens barrel 122. In addition, the first roller unit 123A that rolls freely is placed between the guide grooves 124, 125.

Openings 126 and convex portions 127 where guide element 2 is housed are provided respectively at approximately the center portion of the other three plane portions except the bottom surface portion 121a of the fixed lens barrel 121. Corresponding to the openings 126 and the like, guide grooves 128 whose section is "V"-shaped and continues in the axis direction are provided respectively at approximately the center portion of the three plane portions except the bottom surface portion 122a of the movable lens barrel 122.

The second roller unit 123B, third roller unit 123C and fourth roller unit 123D that roll freely are placed at three places between the three guide grooves 128 of the movable lens barrel 122 and the guide grooves 7 of three guide elements 2 retained by the fixed lens barrel 121. Further, three sets of spring plates 6A, 6B that are preloading elements are placed between the three guide elements 2 and the fixed lens barrel 121, respectively. The three guide elements 2 are biased toward the outside respectively by the spring plates 6A, 6B, thereby giving approximately equal preload of predetermined strength to the first to fourth roller units 123A to 123D.

In such case also, similar to FIG. 16A, because the four roller units 123A to 123D are arranged symmetrically in the lateral direction with the first roller unit 123A as the center, preload of approximately the same strength can be given to the four roller units 113A to 113D in a structure where a spring plate is not used for one place representing the center.

FIG. 16C shows an example in which a supporting structure not using the guide element 2 is applied to two places in the example shown in FIG. 16A. More specifically, a supporting structure at the lower right corner of a fixed lens barrel 131 and a movable lens barrel 132 is also applied to the upper right corner. Corresponding thereto, in FIG. 16C, a guide groove 134 whose section is "V"-shaped and continues in the axis direction is provided at the outer surface of approximately the center portion of an upper right corner 131a of the fixed lens barrel 131, and a corresponding guide groove 135 whose section is "V"-shaped and continues in the axis direction is provided at the inner surface of approximately the center portion of an upper right corner 132a of the movable lens barrel 132. In addition, a second roller unit 133B that rolls freely is placed between the guide grooves 134, 135. Other configurations are the same as those in FIG. 16A.

FIG. 16D shows an example in which a supporting structure not using the guide element 2 is applied to two places in the example shown in FIG. 16B. More specifically, a supporting structure of the bottom surface portion of a fixed lens barrel 141 and a movable lens barrel 142 is also applied to the right side surface portion. Corresponding thereto, in FIG. 16D, a guide groove 144 whose section is "V"-shaped and continues in the axis direction is provided at the outer surface of approximately the center portion of a right side surface portion 141a of the fixed lens barrel 141, and a corresponding guide groove 145 whose sectional shape is "V"-shaped and continues in the axis direction is provided at the inner surface of approximately the center portion of a right side surface portion 142a of the movable lens barrel 142. In addition, a second roller unit 143B that rolls freely is placed between the guide grooves 144, 145. Other configurations are the same as those in FIG. 16B.

With such configurations as shown in FIGS 15C to 15D and FIGS 16A to 16D, approximately uniform preload can be given to three or four roller units by using spring force of the spring plates 6A, 6B, similar to FIGS. 15A and 15B. Accordingly, sinking of the roller units can be avoided in the case where the roller units are at any position in the moving direction and preload applied to the roller units can be prevented from changing largely, thereby moving the movable lens barrel smoothly and accurately. It should be noted that at least one supporting portion including a preloading element be required, but preferably two or more supporting portions be provided if balance of preload is considered.

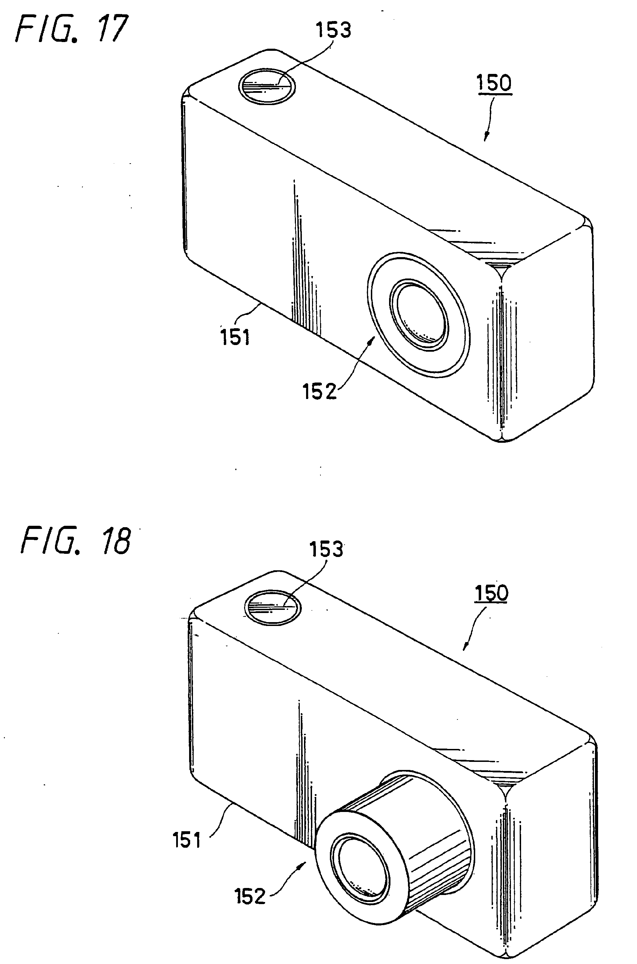

FIGS. 17 to 19 are diagrams of an electronic still camera 150 showing a specific example of an imaging apparatus using a linear motion rolling guide device having a configuration mentioned above. The electronic still camera 150 shown in FIGS. 17 and 18 includes a camera body 151 showing a specific example of an imaging apparatus body, and a retractable lens device 152 is included in the camera body 151.

The camera body 151 is formed of an rectangular enclosure having space inside and the lens device 152 is arranged at one side in the lateral direction that is the longitudinal direction (right side on the front surface of the camera in this example) of the camera body 151. A wiring board where various electronic parts are installed, battery power supply, memory device, other various electronic parts and mechanical parts and devices or the like are housed in the inside space of the camera body 151, although not shown in the figures. A shutter button 153 for capturing an image of a subject is provided on the top surface of the camera body 151. Further, the camera body 151 includes a flat display panel formed of a power button, mode selection dial and liquid crystal display (LCD) for implementing various mode selected by the mode selection dial and for implementing display of an image of a subject or the like, and a electronic view finder or the like, although not shown in the figure.

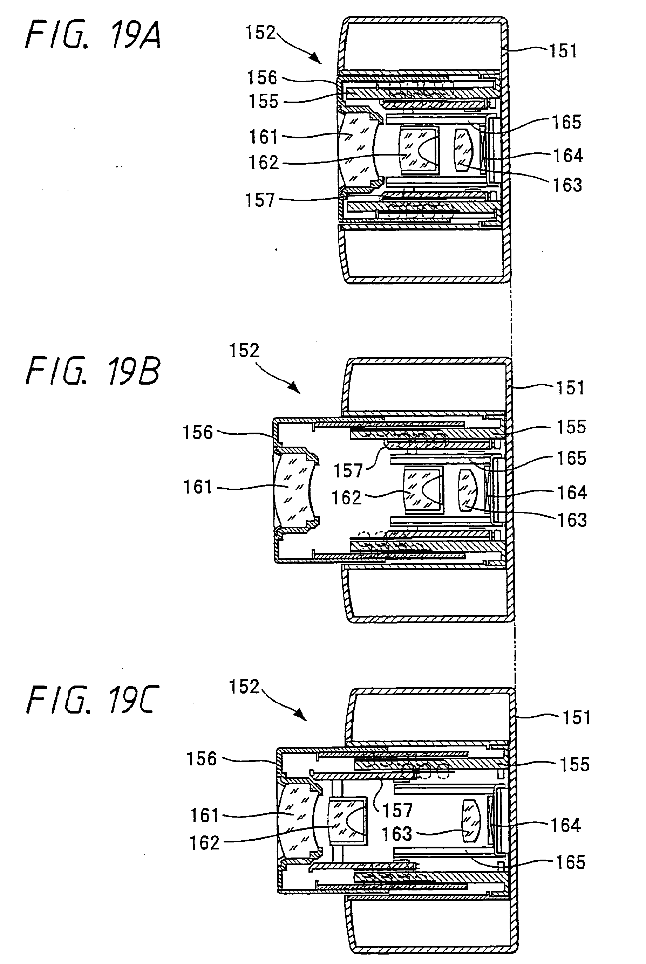

FIG. 17 shows a state where the retractable lens device 152 is retracted and housed in the camera body 151, and FIG. 18 shows a state where the lens device protrudes. FIGS. 19A to 19C show an example of a specific configuration of such retractable lens device 152. The lens device 152 includes: a fixed lens barrel 155 fixed to the camera body 151; a first movable lens barrel 156 capable of moving forward/backward supported on the outside of the fixed lens barrel 155; a second movable lens barrel 157 capable of moving forward/backward supported on the inside of the fixed lens barrel 155; first to third lens groups 161 to 163; and a CCD (Solid state imaging device) 164 or the like showing a specific example of an imaging means.

The fixed lens barrel 155 and two movable lens barrels 156, 157 are formed of circular cylinder, and these are capable of being nested and stored. The rear surface of the fixed lens barrel 155 is fixed to the camera body 151. The inner/outer movable lens barrels 156, 157 are supported on the fixed lens barrel 155, and are capable of linearly moving forward/backward in the optical axis direction of a lens that is front/back direction, on the basis of configurations shown in FIGS. 19A to 19C, for example.

Although not shown in the figures, permanent magnets are attached to the inner circumferential surface and the outer circumferential surface of the fixed lens barrel 155, on the other hand, coils are wound up respectively to the inner/outer movable lens barrels 156, 157, corresponding to the permanent magnets. The inner/outer movable lens barrels 156, 157 can be moved independently and linearly forward/backward, by electromagnetic force obtained by using these coils and permanent magnets in combination.

The first lens group 161 faces a subject, and is retained by the first movable lens barrel 156. The second lens group 162 is arranged behind the first lens group 161, and is retained by the second movable lens barrel 157. The third lens group 163 is retained by a retaining element 165 fixed to the camera body 151 behind the second lens group 162. Optical axes of the three sets of lens groups 161 to 163 coincide with each other, and the CCD 164 is arranged behind the optical axis.

FIG. 19A shows a retracted state where the first movable lens barrel 156 of the lens device 152 is retracted in the camera body 151. Further, FIGS. 19B and 19C show a protruding state where the first movable lens barrel 156 of the lens device 152 protrudes from the camera body 151. The states where the imaging lens protrudes can be classified into a wide state shown in FIG. 19B (wide angle) and a telephoto state shown in FIG. 19C (telephoto). By applying a linear motion rolling guide device of the present invention to the electronic still camera 150 having such configuration, a camera that can retract the lens device smoothly and securely can be prepared.

As explained above, according to the present invention, uniform preload can be given to a rolling element by using a preloading element and inclination in the moving direction of a guide element and a roller unit can be reduced regardless of a moving position of the rolling element, and a smooth motion of a movable element can be secured. Furthermore, at least one supporting mechanism including the above configuration is provided to support a movable lens barrel on a fixed lens barrel, thereby supplying approximately uniform preload to the whole device and obtaining more stable linear motion.

Further, examples that use a permanent magnet as a specific example of the preloading element are described above, but an electromagnet may be used instead of the permanent magnet. Such electromagnet may be formed of a plate-shape or stick-shape iron and coils wound around the iron. The same effect as that obtained in the case using a permanent magnet can be obtained using the electromagnet in a similar manner as a pair of magnetic plates in the aforesaid embodiments.

### INDUSTRIAL APPLICABILITY

Although as described above, the present invention is not limited to the aforesaid embodiments; and for example, the example using an electronic still camera (digital camera) as an imaging apparatus is explained, but it should be appreciated that the present invention can be applied to other imaging apparatuses such as a video camera, personal computer with camera, a PDA or the like. Accordingly, various modifications can be implemented within the scope of the gist thereof.

### DESCRIPTION OF REFERENCE NUMERALS

1, 1A, 31, 31A, 41...LINEAR MOTION ROLLING GUIDE DEVICE
2, 45...GUIDE ELEMENT
3, 46...MOVABLE ELEMENT
4...FIXED ELEMENT
5, 5A, 5B, 5C, 64A, 64B, 64C, 65A, 65B, 65C, 83A, 83B, 83C, 93A,
93B, 93C, 103A, 103B, 103C, 113A, 113B, 113C, 113D, 123A, 123B,
123C, 123D...ROLLER UNIT
6, 6A, 6B...SPRING (PRELOADING ELEMENT)
7, 55...FIRST GUIDE GROOVE
8, 59...SECOND GUIDE GROOVE
10, 23, 35...POSITIONING HOLE
11, 36...FITTING HOLE
14...CYLINDRICAL ROLLER (ROLLING ELEMENT)
15...RETAINER
18...LONG HOLE
21...POSITIONING PIN
22...FITTING PIN
32A, 32B...PLATE PERMANENT MAGNET (PRELOADING ELEMENT)
33, 33A, 34, 34A...MAGNET PLATE
50...LENS BARREL
51, 61, 81, 91, 101, 111, 121, 131, 141, 155... FIXED LENS BARREL
52, 62, 63, 82, 92, 102, 112, 122, 132, 142, 156, 157...MOVABLE LENS BARREL
66, 67, 72, 73, 74, 75, 76, 77, 84, 85, 88, 94, 95, 98, 104, 105, 108, 109, 114, 115, 118, 124, 125, 128, 134, 135, 144, 145...GUIDE GROOVE
56A, 56B, 68, 86, 96, 106, 116, 126...OPENING
69...GUIDE PLATE
150...ELECTRONIC STILL CAMERA (IMAGING APPARATUS)
151...CAMERA BODY (IMAGING APPARATUS BODY)
152...LENS DEVICE
161, 162, 163...LENS GROUP
164...CCD (CHARGE COUPLED DEVICE)

## Claims

1. A linear motion rolling guide device **characterized by** comprising:
a guide element including a first guide groove extending linearly, and fitting holes symmetrically arranged with said first guide groove in between;
a movable element including a second guide groove extending linearly and facing said first guide groove with a predetermined interval;
a fixed element for retaining said guide element;
a roller unit including a plurality of rolling elements, which rolls freely and is placed between said first guide groove and said second guide groove; and
a preloading element for giving preload to said roller unit through said guide element and said movable element, wherein
fitting pins capable of fitting into said fitting holes of said guide element are provided to said fixed element; and
said fitting holes are long holes extended in a direction perpendicular to a direction in which said first guide groove extends.

2. The linear motion rolling guide device according to claim 1, **characterized in that**
said preloading element is formed of one or more spring plates, coil springs or rubber elastic elements, or one or more combinations thereof which bias said guide element to said movable element.

3. The linear motion rolling guide device according to claim 1, **characterized in that**
said preloading element includes a pair of elastic supporting portions that bias both sides of said first guide groove of said guide element with approximately equal force or that support both the sides of said first guide groove by receiving force loaded from said guide element.

4. The linear motion rolling guide device according to claim 3, **characterized in that**
said pair of elastic supporting portions of said preloading element is formed of one elastic element including a plurality of elastic pieces that individually contact with both the sides of said first guide groove or two elastic elements that individually contact with both the sides of said first guide groove of said guide element.

5. The linear motion rolling guide device according to claim 1, **characterized in that**:
said preloading element is formed of a pair of first permanent magnets or first electromagnets fixed on said guide element and a pair of second permanent magnets or second electromagnets fixed on said movable element;
said pair of first permanent magnets or first electromagnets is arranged symmetrically with said first guide groove in between on the same surface where said first guide groove of said guide element is provided; and
said pair of second permanent magnets or second electromagnets is arranged symmetrically with said second guide groove in between on the same surface where said second guide groove of said movable element is provided, such that said pair of second permanent magnets or second electromagnets faces said pair of first permanent magnets or first electromagnets to attract or repel each other.

6. The linear motion rolling guide device according to claim 1, **characterized in that**:
said preloading element is formed of a pair of first permanent magnets or first electromagnets fixed on said guide element and a pair of second permanent magnets or second electromagnets fixed on the fixed element;
said pair of first permanent magnets or first electromagnets is arranged symmetrically with said first guide groove in between on an opposite surface to a surface where said first guide groove of said guide element is provided; and
said pair of second permanent magnets or second electromagnets is arranged symmetrically and faces said pair of first permanent magnets or first electromagnets to repel each other.

7. A linear motion rolling guide device **characterized by** comprising:
a fixed element including a plurality of first guide grooves extending linearly and parallel to each other;
a movable element including a plurality of second guide grooves extending linearly and parallel to each other, facing said first guide grooves with a predetermined interval;
a plurality of roller units including a plurality of rolling elements, which roll freely and are placed between said first guide grooves and said second guide grooves;
at least one guide element including one of said plurality of first guide grooves, and fitting holes retained by said fixed element and arranged symmetrically with said first guide groove in between; and
a preloading element for giving preload to said roller units through said guide element and said movable element, wherein
fitting pins capable of fitting into said fitting holes of said guide element are provided to said fixed element; and
said fitting holes are long holes extended in a direction perpendicular to a direction in which said first guide groove extends.

8. The linear motion rolling guide device according to claim 7, **characterized in that**
said preloading element is formed of one or more spring plates, coil springs or rubber elastic elements, or one or more combinations thereof which bias said guide element to said movable element.

9. The linear motion rolling guide device according to claim 7, **characterized in that**
said preloading element includes a pair of elastic supporting portions that bias both sides of said first guide groove of said guide element with approximately equal force or that support both the sides of said first guide groove by receiving force loaded from said guide element.

10. The linear motion rolling guide device according to claim 9, **characterized in that**
said pair of elastic supporting portions of said preloading element is formed of one elastic element including a plurality of elastic pieces that individually contact with both the sides of said first guide groove or two elastic elements that individually contact with both the sides of said first guide groove of said guide element.

11. The linear motion rolling guide device according to claim 7, **characterized in that**:
said preloading element is formed of a pair of first permanent magnets or first electromagnets fixed on said guide element and a pair of second permanent magnets or second electromagnets fixed on said movable element;
said pair of first permanent magnets or first electromagnets is arranged symmetrically with said first guide groove in between on the same surface where said first guide groove of said guide element is provided; and
said pair of second permanent magnets or second electromagnets is arranged symmetrically with said second guide groove in between on the same surface where said second guide groove of said movable element is provided, such that said pair of second permanent magnets or second electromagnets faces said pair of first permanent magnets or first electromagnets to attract or repel each other.

12. The linear motion rolling guide device according to claim 7, **characterized in that**:
said preloading element is formed of a pair of first permanent magnets or first electromagnets fixed on said guide element and a pair of second permanent magnets or second electromagnets fixed on the fixed element;
said pair of first permanent magnets or first electromagnets is arranged symmetrically with said first guide groove in between on an opposite surface to a surface where said first guide groove of said guide element is provided; and
said pair of second permanent magnets or second electromagnets is arranged symmetrically and faces said pair of first permanent magnets or first electromagnets to repel each other.

13. The linear motion rolling guide device according to claim 7, **characterized in that**
the number of said guide elements is equal to that of said plurality of first guide grooves.

14. A lens device **characterized by** comprising:
a fixed lens barrel including a plurality of first guide grooves extending linearly and parallel to each other;
a movable lens barrel including a plurality of second guide grooves extending linearly and parallel to each other, facing said first guide grooves with a predetermined interval;
a plurality of roller units including a plurality of rolling elements, which roll freely and are placed between said first guide grooves and said second guide grooves, wherein
at least one guide element including one of said plurality of first guide grooves and fitting holes retained by said fixed element and arranged symmetrically with said first guide groove in between, and a preloading element for giving preload to said roller units through said guide element and said movable element, are provided,
fitting pins capable of fitting into said fitting holes of said guide element are provided to said fixed element, and
said fitting holes are long holes extended in a direction perpendicular to a direction in which said first guide groove extends.
